# EUROPEAN PATENT SPECIFICATION

(11) **EP 4 112 953 B1**
(45) Date of publication and mention of the grant of the patent: **10.04.2024**
(21) Application number: 22182261.2
(22) Date of filing: 30.06.2022
(51) Int. Cl.: F16C 11/06, F16C 11/08, F16C 11/12, B60G 7/00

(54) **A FLEXIBLE COUPLING MECHANISM AND A DISPLACEMENT SENSING DEVICE WITH THE MECHANISM**
FLEXIBLER KUPPLUNGSMECHANISMUS UND VERSCHIEBUNGSMESSVORRICHTUNG MIT DEM MECHANISMUS
MÉCANISME DE COUPLAGE FLEXIBLE ET DISPOSITIF DE DÉTECTION DE DÉPLACEMENT COMPORTANT LE MÉCANISME

(30) Priority: 30.06.2021 CN 202110738605
(43) Date of publication of application: 04.01.2023
(73) Proprietor: Continental Automotive Technologies GmbH, 30165 Hannover (DE)
(72) Inventor: Cai, Guozhen, 60488 Frankfurt am Main (DE)
(74) Representative: Continental Corporation

(56) References cited:
- EP-A1- 3 299 642
- WO-A1-2021/075158
- DE-A1- 3 742 084
- DE-A1-102013 102 197
- US-A1- 2020 025 240

## Description

### Technical Field

The present invention falls within the field of measurement technology, and in particular relates to a flexible coupling mechanism and a displacement sensing device with the mechanism used for measuring displacement of vehicle components.

### Background Art

A known displacement sensing device for measuring the displacement of a vehicle component comprises an angle sensor, which is hinged to a hinge mechanism at one end of a connecting rod through a swing arm, and the other end of the connecting rod is connected to a vehicle component. The component is, for example, the control arm of a vehicle chassis, etc. Generally, the swing arm is connected to the connecting rod via articulation elements, for example, a ball joint fixed on the swing arm and a spherical seat fixed on the connecting rod. The connecting rod converts the up-down linear movement of a vehicle component, for example, a chassis control arm, into the rotational movement of the swing arm on the angle sensor. Bearings for such a device are shown in US2020/025240A1, EP 3 299 642 A1, DE 10 2013 102 197 A1, WO 2021/075158 A1 and DE 37 42 084 A1.

While a vehicle is traveling, the chassis control arm not only jumps up and down in the vertical direction, but also swings back and forth in the forward horizontal direction. Therefore, a ball joint used as the articulation element can meet the requirements of both up-down jumping and front-back swing. However, existing ball joint designs still have some shortcomings. Since the ball joint is pressed into the connecting rod, the connecting rod is required to be injectionmolded with a highly elastic thermoplastic composite (TPC), resulting in a high cost; grease lubrication is required between the spherical seat and the ball joint; since forced demolding is required at the spherical seat of the connecting rod, it is difficult to control the injection dimensions, resulting in the mold having a high cost; and the soft TPC used for the connecting rod results in low rigidity of the connecting rod, which impacts the accuracy of the output signal from the sensor.

### Summary of the Invention

To overcome the shortcomings in the prior art, the present invention provides a flexible coupling mechanism that is low in cost, easy to manufacture and form and has high strength, and a displacement sensing device with the mechanism.

To achieve the above purpose, the present invention provides a flexible coupling mechanism, used to connect two parts that rotate relative to each other, and the flexible coupling mechanism comprises a flexible bearing portion and a connecting shaft inserted into the flexible bearing portion; the flexible bearing portion comprises a jaw portion, which comprises a plurality of jaws, wherein a jaw comprises a fixed end and a free end, the free ends of the plurality of jaws together form a channel into which the connecting shaft can be inserted, and the channel is used to support and limit the connecting shaft. The outer surface of the free ends of the plurality of jaws that fits the connecting shaft is in an arc shape. A concave portion is formed on the surface of the connecting shaft that fits the free ends of the plurality of jaws, and the concave portion is designed and formed as a surface of revolution.

Preferably, the plurality of jaws are evenly spaced.

Preferably, the flexible bearing portion further comprises an annular body, and the fixed ends of the plurality of jaws are fixedly connected to an axial end surface of the annular body.

Preferably, the plurality of jaws extend from their fixed ends toward the vicinity of the centerline of the annular body and bend to form the free ends.

Preferably, the extension path of the plurality of jaws from the fixed ends to the free ends is essentially U-shaped or approximately U-shaped.

Preferably, the free ends of the plurality of jaws are capable of reversible elastic deformation when the connecting shaft is inserted, the plurality of jaws of the flexible bearing portion move outward away from each other when the connecting shaft is inserted and pressed into the flexible bearing portion, and the plurality of jaws return to the original positions after the connecting shaft is in position.

Preferably, the concave portion is designed and formed as a hyperboloid of revolution.

Preferably, one end of the connecting shaft is formed as an arc-shaped end.

Preferably, the surface of the arc-shaped end is a paraboloid of revolution.

To achieve the above purpose, the present invention also provides a displacement sensing device, comprising a connecting rod, a swing arm and an angle sensor, wherein one end of the connecting rod is connected to a component under measurement through a first coupling mechanism, the other end of the connecting rod is connected to one end of the swing arm through a second coupling mechanism, the other end of the swing arm is connected to the angle sensor, and the first coupling mechanism and/or the second coupling mechanism is the flexible coupling mechanism as described above.

Preferably, either the flexible bearing portion or the connecting shaft is fixed on the connecting rod, and the other of the two is fixed on the component under measurement or the swing arm.

Preferably, the flexible bearing portion has an annular body, and the annular body is fixedly connected to an end of the connecting rod.

Preferably, the same structure of the flexible bearing portion is provided on each end of the connecting rod.

Preferably, the connecting rod and the flexible bearing portions are integrally formed.

Preferably, the material of the connecting shaft, the flexible bearing portion and the connecting rod is glass fiber reinforced resin PA66-GF30.

Preferably, the component under measurement is a vehicle chassis, a vehicle body, a headlamp and/or a vehicle axle.

Compared with the prior art, the flexible coupling mechanism and the displacement sensing device with the mechanism provided by the present invention are designed with a unique flexible bearing structure, so that the forming process is easier, more controllable and less expensive during the manufacturing process, especially the injection molding process; in addition, the connecting shaft, the flexible bearing portion and the connecting rod may be made of a glass fiber reinforced resin, so that self-lubrication is provided among different parts, without the need of additional lubricant; parts of the position sensing device such as the connecting rod, the swing arm, etc. are highly rigid, and the accuracy of displacement transmission is relatively high. The position sensing device of the present invention can meet the requirements of both up-down jumping and front-back swing of vehicle components.

### Brief Description of the Drawings

Figure 1 is a schematic diagram of the displacement sensing device with an angle sensor of the preferred embodiments of the present invention;
Figure 2 is a schematic diagram of the assembled flexible coupling mechanism of the preferred embodiments of the present invention;
Figure 3 is a schematic diagram of the disassembled flexible coupling mechanism of the preferred embodiments of the present invention;
Figure 4 is a sectional view of the flexible bearing portion and the connecting rod in Figure 3.

### Detailed Description of the Embodiments

The solution of the present invention will be further described below in conjunction with the drawings and preferred embodiments.

Details are given in the following description so that those skilled in the art can understand the invention more comprehensively. However, it is obvious to those skilled in the art that the invention can be realized without some of these details. In addition, it should be understood that the invention is not limited to the specific embodiments described. On the contrary, the invention can be implemented by considering using any combination of the following characteristics and elements, no matter whether they relate to different embodiments. Therefore, the following aspects, characteristics, embodiments and advantages are only used to describe the invention, and should not be considered as the elements or limitations of the claims, unless otherwise expressly specified in the claims. In addition, terms indicating directions in this document, for example, up, down, left, right, upper side, lower side, etc., are only based on the relative positions of the parts in the drawing described for the convenience of description, and should not be construed as limiting the scope of the present invention.

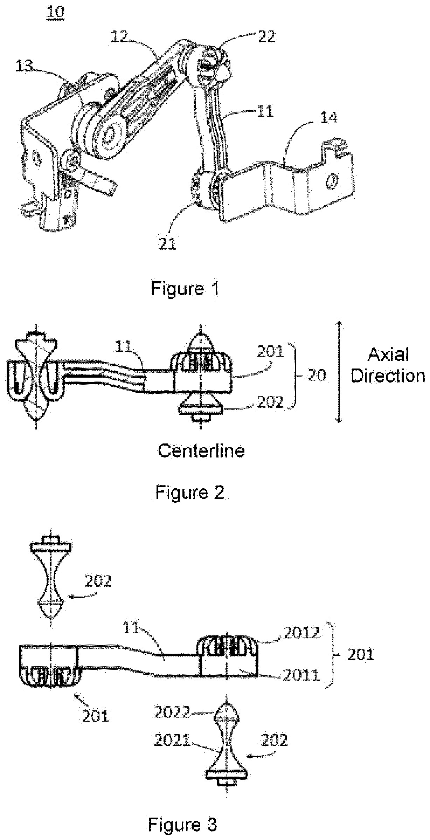

Figure 1 is a schematic diagram of the displacement sensing device 10 with an angle sensor 13 of the preferred embodiments of the present invention. With reference to Figure 1, the displacement sensing device 10 comprises a connecting rod 11, a swing arm 12 and an angle sensor 13. One end of the connecting rod 11 is connected to the control arm assembly 14 of a vehicle chassis through a first coupling mechanism 21, the other end of the connecting rod 11 is connected to one end of the swing arm 12 through a second coupling mechanism 22, and the other end of the swing arm 12 is connected to the angle sensor 13. The first and the second coupling mechanisms 21 and 22 respectively comprise a flexible coupling mechanism 20 (as shown in Figure 2). When the vehicle chassis is displaced, the chassis control arm assembly 14 drives the connecting rod 11 to move through the first coupling mechanism 21, the connecting rod 11 drives the swing arm 12 to swing through the second coupling mechanism 22, the displacement of the connecting rod 11 is thus converted to the rotation angle of the swing arm 12, and the angle sensor 13 measures the rotation angle of the swing arm 12 and thus the displacement of the vehicle chassis.

Figure 2 is a schematic diagram of the flexible coupling mechanism of the preferred embodiments of the present invention in the working status. With reference to Figure 2, the flexible coupling mechanism 20 comprises a flexible bearing portion 201 and a connecting shaft 202 inserted into the flexible bearing portion 201. The flexible bearing portion 201 is fixed on the connecting rod 11, and the connecting shaft 202 is fixed on the vehicle chassis control arm assembly or a swing arm (not shown in the figure).

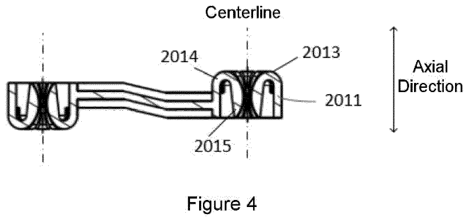

Figure 3 is a schematic diagram of the disassembled flexible coupling mechanism of the preferred embodiments of the present invention, and Figure 4 is a sectional view of the flexible bearing portion and the connecting rod in Figure 3. With reference to Figure 2 and Figure 3, the flexible bearing portion 201 comprises an annular body 2011 and a jaw portion 2012. The annular body 2011 is fixedly connected to an end of the connecting rod 11. With reference to Figure 4, the jaw portion 2012 comprises a plurality of jaws 2013, a jaw 2013 comprises a fixed end 2014 and a free end 2015, the fixed ends 2014 of the jaws 2013 are fixed on an axial end surface of the annular body 2011, and the jaws 2013 extend from the fixed ends 2014 to the vicinity of the centerline of the annular body 2011 and bend to form the free ends 2015, and the extension path of the jaws 2013 from the fixed ends 2014 to the free ends 2015 is essentially U-shaped or approximately U-shaped. The free ends 2015 of the plurality of jaws 2013 together form a channel at the center of the jaw portion 2012, into which the connecting shaft 202 can be inserted, the channel is used to support and limit the connecting shaft 202 inserted therein, and the free ends 2015 of the plurality of jaws 2013 are capable of reversible elastic deformation when the connecting shaft 202 is inserted. The plurality of jaws 2013 of the flexible bearing portion 201 move outward away from each other under the pressing force of the connecting shaft 202 when the connecting shaft 202 is inserted into the flexible bearing portion 201, and the plurality of jaws 2013 return to the original positions and fasten the connecting shaft 202 when the connecting shaft 202 is in position.

Further, with reference to Figure 2 and Figure 4, the surface of the free end 2015 of the jaws 2013 that fits the connecting shaft 202 is arc-shaped, to facilitate fitting with the connecting shaft 202.

With reference to Figure 2, Figure 3 and Figure 4, a concave portion 2021 is formed on the surface of the connecting shaft 202 that fits the free ends 2015 of the jaws on the flexible bearing portion 201, and the concave portion 2021 is designed and formed as a surface of revolution, preferably as a hyperboloid of revolution. The curved shape of the concave portion 2021 can better fit the arc shape of the outer surface of the free ends 2015 of the jaws. During practical use of the flexible coupling mechanism 20, when the connecting shaft 202 rotates about the axial centerline of the flexible bearing portion 201, the jaws 2013 of the flexible bearing portion 201 will not change in their shape; when the connecting shaft 202 swings in the direction perpendicular to the axial direction of the flexible bearing portion 201, the jaws 2013 of the flexible bearing portion 201 will have elastic deformation; when the connecting shaft 202 returns to the axial centerline, the jaws 2013 of the flexible bearing portion 201 restore their original shape. With reference to Figure 3, one end of the connecting shaft 202 is formed as an arc-shaped end 2022, preferably as an arc-shaped end 2022 formed by a paraboloid of revolution. The design of an arc-shaped end 2022 reduces the resistance to insert the connecting shaft 202, so that the connecting shaft 202 can be easily inserted into the channel formed by the plurality of jaws on the flexible bearing portion 201.

Further, with reference to Figure 3, the same structure of the flexible bearing portion 201 is provided on each end of the connecting rod 11, and preferably the flexible bearing portions 201 on the two ends are disposed in the opposite directions. The connecting rod 11 and the flexible bearing portions 201 are preferably integrally formed; the connecting shaft 202, the flexible bearing portions 201 and the connecting rod 11 are preferably made of glass fiber reinforced resin PA66-GF30, so that the flexible coupling mechanism 20 is selflubricating without the need of additional lubricant, and features high strength and low cost. It should be understood that other means may be used in other embodiments than the above. For example, the flexible bearing portion 201 may be provided on only one end of the connecting rod 11, and another structure is provided on the other end; the connecting rod 11 and the flexible bearing portion 201 may be connected instead of being formed integrally, etc.

It should be understood that, while the flexible bearing portion 201 of the flexible coupling mechanism 20 is fixed on the connecting rod 11 and the connecting shaft 202 is fixed on the component under measurement or a swing arm in the above embodiment, the relative positions of the flexible bearing portion 201 and the connecting shaft 202 are interchangeable in other embodiments, for example, with the connecting shaft 202 fixed on the connecting rod 11, and the flexible bearing portion 201 fixed on a swing arm or the component under measurement.

It should be understood that, while the plurality of jaws 2013 of the jaw portion 2012 are preferably positioned on the same axial end surface of the annular body 2011 in this embodiment, the plurality of jaws 2013 may be positioned on the opposite axial end surfaces of the annular body 2011 in another embodiment. Preferably, the plurality of jaws 2013 are evenly spaced on the axial end surfaces of the annular body 2011; preferably, there are 8 jaws for the plurality of jaws 2013.

It should be understood that, while the connecting rod 11 is connected to the vehicle chassis control arm assembly 14 to measure the chassis displacement in the above embodiment, the connecting rod 11 may be connected to other vehicle components such as the vehicle body, headlamp or axle to measure displacement of the vehicle component in another embodiment. When the vehicle component jumps up and down and swings back and forth, the connecting shaft and the flexible bearing portion simultaneously rotate about an axis and swing around a center, and the elastic deformation of the jaws of the flexible bearing portion can meet the requirements of both rotation and swing.

Although the invention is already disclosed above with preferred embodiments, the invention is not limited to the preferred embodiments. The scope of protection of the invention is defined by the scope of the appended claims.

## Claims

1. A flexible coupling mechanism (20), used to connect two parts that rotate relative to each other, wherein the flexible coupling mechanism (20) comprises a flexible bearing portion (201) and a connecting shaft (202) inserted into the flexible bearing portion (201);
the flexible bearing portion (201) comprises a jaw portion (2012), which comprises a plurality of jaws (2013), wherein a jav (2013) comprises a fixed end (2014) and a free end (2015), the free ends (2015) of the plurality of jaws (2013) together form a channel into which the connecting shaft (202) can be inserted, and the channel is used to support and limit the connecting shaft (202), wherein the outer surface of the free ends (2015) of the plurality of jaws (2013) that fits the connecting shaft (202) is in an arc shape, **characterized in that** a concave portion (2021) is formed on the surface of the connecting shaft (202) that fits the free ends (2015) of the plurality of jaws (2013), and the concave portion (2021) is designed and formed as a surface of revolution.

2. The flexible coupling mechanism as claimed in claim 1, **characterized in that** the plurality of jaws are evenly spaced.

3. The flexible coupling mechanism as claimed in claim 1, **characterized in that** the flexible bearing portion further comprises an annular body, and the fixed ends of the plurality of jaws are fixedly connected to an axial end surface of the annular body.

4. The flexible coupling mechanism as claimed in claim 3, **characterized in that** the plurality of jaws extend from their fixed ends toward the vicinity of the centerline of the annular body and bend to form the free ends.

5. The flexible coupling mechanism as claimed in claim 1, **characterized in that** the extension path of the plurality of jaws from the fixed ends to the free ends is essentially U-shaped or approximately U-shaped.

6. The flexible coupling mechanism as claimed in any of claims 1 to 5, **characterized in that** the free ends of the plurality of jaws are capable of reversible elastic deformation when the connecting shaft is inserted, the plurality of jaws of the flexible bearing portion move outward away from each other when the connecting shaft is inserted and pressed into the flexible bearing portion, and the plurality of jaws return to the original positions after the connecting shaft is in position.

7. The flexible coupling mechanism as claimed in any of claims 1 to 6, **characterized in that** the concave portion is designed and formed as a hyperboloid of revolution.

8. The flexible coupling mechanism as claimed in any of claims 1 to 6, **characterized in that** one end of the connecting shaft is formed as an arc-shaped end.

9. The flexible coupling mechanism as claimed in claim 8, **characterized in that** the surface of the arc-shaped end is a paraboloid of revolution.

10. A displacement sensing device, comprising a connecting rod, a swing arm and an angle sensor, wherein one end of the connecting rod is connected to a component under measurement through a first coupling mechanism, the other end of the connecting rod is connected to one end of the swing arm through a second coupling mechanism, and the other end of the swing arm is connected to the angle sensor, and **characterized in that** the first coupling mechanism and/or the second coupling mechanism is the flexible coupling mechanism as claimed in any of claims 1 to 9.

11. The displacement sensing device as claimed in claim 10, **characterized in that** either the flexible bearing portion or the connecting shaft is fixed on the connecting rod, and the other of the two is fixed on the component under measurement or the swing arm.

12. The displacement sensing device as claimed in claim 10, **characterized in that** the flexible bearing portion has an annular body, and the annular body is fixedly connected to an end of the connecting rod.

13. The displacement sensing device as claimed in claim 10, **characterized in that** the same structure of the flexible bearing portion is provided on each end of the connecting rod.

14. The displacement sensing device as claimed in claim 10, **characterized in that** the connecting rod and the flexible bearing portions are preferably integrally formed.

15. The displacement sensing device as claimed in claim 10, **characterized in that** the material of the connecting shaft, the flexible bearing portion and the connecting rod is glass fiber reinforced resin PA66-GF30.

16. The displacement sensing device as claimed in claim 10, **characterized in that** the component under measurement is a vehicle chassis, a vehicle body, a headlamp and/or a vehicle axle.

## Patentansprüche

1. Flexibler Kopplungsmechanismus (20), der zum Verbinden von zwei sich relativ zueinander drehenden Teilen verwendet wird, wobei der flexible Kopplungsmechanismus (20) einen flexiblen Lagerabschnitt (201) und eine in den flexiblen Lagerabschnitt (201) eingesetzte Verbindungswelle (202) aufweist; wobei der flexible Lagerabschnitt (201) einen Backenabschnitt (2012) aufweist, der eine Mehrzahl von Backen (2013) aufweist, wobei eine Backe (2013) ein befestigtes Ende (2014) und ein freies Ende (2015) aufweist, wobei die freien Enden (2015) der Mehrzahl von Backen (2013) zusammen einen Kanal bilden, in den die Verbindungswelle (202) eingesetzt werden kann, und wobei der Kanal zum Lagern und Begrenzen der Verbindungswelle (202) verwendet wird, wobei die Außenfläche der freien Enden (2015) der Mehrzahl von Backen (2013), die die Verbindungswelle (202) befestigt, eine Bogenform aufweist, **dadurch gekennzeichnet, dass** ein konkaver Abschnitt (2021) auf der Fläche der Verbindungswelle (202), die die freien Enden (2015) der Mehrzahl von Backen (2013) befestigt, gebildet ist, und der konkave Abschnitt (2021) als eine Umdrehungsfläche ausgestaltet und gebildet ist.

2. Flexibler Kopplungsmechanismus nach Anspruch 1, **dadurch gekennzeichnet, dass** die Mehrzahl von Backen gleichmäßig beabstandet sind.

3. Flexibler Kopplungsmechanismus nach Anspruch 1, **dadurch gekennzeichnet, dass** der flexible Lagerabschnitt ferner einen ringförmigen Körper aufweist, und die befestigten Enden der Mehrzahl von Backen fest mit einer axialen Endfläche des ringförmigen Körpers verbunden sind.

4. Flexibler Kopplungsmechanismus nach Anspruch 3, **dadurch gekennzeichnet, dass** sich die Mehrzahl von Backen von ihren befestigten Enden in die Nähe der Mittellinie des ringförmigen Körpers erstrecken und sich biegen, um die freien Enden zu bilden.

5. Flexibler Kopplungsmechanismus nach Anspruch 1, **dadurch gekennzeichnet, dass** der Erstreckungspfad der Mehrzahl von Backen von den befestigten Enden zu den freien Enden im Wesentlichen U-förmig oder annähernd U-förmig ist.

6. Flexibler Kopplungsmechanismus nach einem der Ansprüche 1 bis 5, **dadurch gekennzeichnet, dass** die freien Enden der Mehrzahl von Backen zu einer reversiblen elastischen Verformung in der Lage sind, wenn die Verbindungswelle eingesetzt wird, wobei sich die Mehrzahl von Backen des flexiblen Lagerabschnitts voneinander weg nach außen bewegen, wenn die Verbindungswelle eingesetzt und in den flexiblen Lagerabschnitt gedrückt wird, und wobei die Mehrzahl von Backen zu den ursprünglichen Positionen zurückkehren, nachdem sich die Verbindungswelle in ihrer Position befindet.

7. Flexibler Kopplungsmechanismus nach einem der Ansprüche 1 bis 6, **dadurch gekennzeichnet, dass** der konkave Abschnitt als ein Rotationshyperboloid ausgestaltet und gebildet ist.

8. Flexibler Kopplungsmechanismus nach einem der Ansprüche 1 bis 6, **dadurch gekennzeichnet, dass** ein Ende der Verbindungswelle als ein bogenförmiges Ende gebildet ist.

9. Flexibler Kopplungsmechanismus nach Anspruch 8, **dadurch gekennzeichnet, dass** die Fläche des bogenförmigen Endes ein Rotationsparaboloid ist.

10. Wegsensorvorrichtung, die eine Verbindungsstange, einen Schwenkarm und einen Winkelsensor aufweist, wobei ein Ende der Verbindungsstange durch einen ersten Kopplungsmechanismus mit einer zu messenden Komponente verbunden ist, das andere Ende der Verbindungsstange durch einen zweiten Kopplungsmechanismus mit einem Ende des Schwenkarms verbunden ist, und das andere Ende des Schwenkarms mit dem Winkelsensor verbunden ist, und **dadurch gekennzeichnet, dass** der erste Kopplungsmechanismus und/oder der zweite Kopplungsmechanismus der flexible Kopplungsmechanismus nach einem der Ansprüche 1 bis 9 ist.

11. Wegsensorvorrichtung nach Anspruch 10, **dadurch gekennzeichnet, dass** entweder der flexible Lagerabschnitt oder die Verbindungswelle auf der Verbindungsstange befestigt ist, und das andere der beiden auf der zu messenden Komponente oder dem Schwenkarm befestigt ist.

12. Wegsensorvorrichtung nach Anspruch 10, **dadurch gekennzeichnet, dass** der flexible Lagerabschnitt einen ringförmigen Körper aufweist, und der ringförmige Körper fest mit einem Ende der Verbindungsstange verbunden ist.

13. Wegsensorvorrichtung nach Anspruch 10, **dadurch gekennzeichnet, dass** dieselbe Struktur des flexiblen Lagerabschnitts auf jedem Ende der Verbindungsstange bereitgestellt ist.

14. Wegsensorvorrichtung nach Anspruch 10, **dadurch gekennzeichnet, dass** die Verbindungsstange und die flexiblen Lagerabschnitte vorzugsweise integral gebildet sind.

15. Wegsensorvorrichtung nach Anspruch 10, **dadurch gekennzeichnet, dass** das Material der Verbindungswelle, des flexiblen Lagerabschnitts und der Verbindungsstange glasfaserverstärktes Harz PA66-GF30 ist.

16. Wegsensorvorrichtung nach Anspruch 10, **dadurch gekennzeichnet, dass** die zu messende Komponente ein Fahrzeugchassis, eine Fahrzeugkarosserie, ein Scheinwerfer und/oder eine Fahrzeugachse ist.

## Revendications

1. Mécanisme de couplage flexible (20), utilisé pour relier deux parties qui entrent en rotation l'une relativement à l'autre, dans lequel le mécanisme de couplage flexible (20) comprend une partie palier flexible (201) et un arbre de liaison (202) inséré dans la partie palier flexible (201) ;
la partie palier flexible (201) comprend une partie de mâchoires (2012), qui comprend une pluralité de mâchoires (2013), dans lequel une mâchoire (2013) comprend une extrémité fixe (2014) et une extrémité libre (2015), les extrémités libres (2015) de la pluralité de mâchoires (2013) forment ensemble une gorge dans laquelle l'arbre de liaison (202) peut être inséré, et la gorge est utilisée pour supporter et limiter l'arbre de liaison (202), dans lequel la surface extérieure des extrémités libres (2015) de la pluralité de mâchoires (2013) qui installe l'arbre de liaison (202) est en forme d'arc, **caractérisé en ce qu'**une partie concave (2021) est formée sur la surface de l'arbre de liaison (202) qui installe les extrémités libres (2015) de la pluralité de mâchoires (2013), et la partie concave (2021) est conçue et sous forme de surface de révolution.

2. Mécanisme de couplage flexible selon la revendication 1, **caractérisé en ce que** la pluralité de mâchoires sont espacées uniformément.

3. Mécanisme de couplage flexible selon la revendication 1, **caractérisé en ce que** la partie palier flexible comprend en outre un corps annulaire, et les extrémités fixes de la pluralité de mâchoires sont reliées de façon fixe à une surface d'extrémité axiale du corps annulaire.

4. Mécanisme de couplage flexible selon la revendication 3, **caractérisé en ce que** la pluralité de mâchoires s'étendent depuis leurs extrémités fixes vers le voisinage de l'axe central du corps annulaire et fléchissent pour former les extrémités libres.

5. Mécanisme de couplage flexible selon la revendication 1, **caractérisé en ce que** le chemin d'extension de la pluralité de mâchoires depuis les extrémités fixes jusqu'aux extrémités libres est essentiellement en forme de U ou approximativement en forme de U.

6. Mécanisme de couplage flexible selon l'une quelconque des revendications 1 à 5, **caractérisé en ce que** les extrémités libres de la pluralité de mâchoires sont capables de déformation élastique réversible lorsque l'arbre de liaison est inséré, la pluralité de mâchoires de la partie palier flexible s'éloignent vers l'extérieur les unes des autres lorsque l'arbre de liaison est inséré et pressé dans la partie palier flexible, et la pluralité de mâchoires retournent aux positions d'origine après que l'arbre de liaison est en position.

7. Mécanisme de couplage flexible selon l'une quelconque des revendications 1 à 6, **caractérisé en ce que** la partie concave est conçue et sous forme d'hyperboloïde de révolution.

8. Mécanisme de couplage flexible selon l'une quelconque des revendications 1 à 6, **caractérisé en ce qu'**une extrémité de l'arbre de liaison est sous forme d'extrémité en forme d'arc.

9. Mécanisme de couplage flexible selon la revendication 8, **caractérisé en ce que** la surface de l'extrémité en forme d'arc est un paraboloïde de révolution.

10. Dispositif de détection de déplacement, comprenant une bielle, un bras oscillant et un capteur d'angle, dans lequel une extrémité de la bielle est reliée à un composant, faisant l'objet d'une mesure, par l'intermédiaire d'un premier mécanisme de couplage, l'autre extrémité de la bielle est reliée à une extrémité du bras oscillant par l'intermédiaire d'un second mécanisme de couplage, et l'autre extrémité du bras oscillant est reliée au capteur d'angle, et **caractérisé en ce que** le premier mécanisme de couplage et/ou le second mécanisme de couplage sont le mécanisme de couplage flexible selon l'une quelconque des revendications 1 à 9.

11. Dispositif de détection de déplacement selon la revendication 10, **caractérisé en ce que** la partie palier flexible ou l'arbre de liaison est fixé sur la bielle, et l'autre des deux est fixé sur le composant, faisant l'objet d'une mesure, ou le bras oscillant.

12. Dispositif de détection de déplacement selon la revendication 10, **caractérisé en ce que** la partie palier flexible a un corps annulaire, et le corps annulaire est relié de façon fixe à une extrémité de la bielle.

13. Dispositif de détection de déplacement selon la revendication 10, **caractérisé en ce que** la même structure de la partie palier flexible est prévue sur chaque extrémité de la bielle.

14. Dispositif de détection de déplacement selon la revendication 10, **caractérisé en ce que** la bielle et les parties paliers flexibles sont de préférence formées de façon monobloc.

15. Dispositif de détection de déplacement selon la revendication 10, **caractérisé en ce que** le matériau de l'arbre de liaison, de la partie palier flexible et de la bielle est une résine renforcée de fibres de verre PA66-GF30.

16. Dispositif de détection de déplacement selon la revendication 10, **caractérisé en ce que** le composant, faisant l'objet d'une mesure, est un châssis de véhicule, une carrosserie de véhicule, un phare et/ou un essieu de véhicule.
